# EUROPÄISCHE PATENTANMELDUNG

(11) **EP 2 664 899 A1**
(43) Veröffentlichungstag der Anmeldung: **20.11.2013**
(21) Anmeldenummer: 12168261.1
(22) Anmeldetag: 16.05.2012
(51) Int. Cl.: G01D 5/347

(54) **Messwertgeber zum Erhalt einer Positionsinformation und Verfahren zu dessen Betrieb**

(71) Anmelder: Siemens Aktiengesellschaft, 80333 München (DE)
(72) Erfinder: Zettner, Jürgen, 90587 Veitsbronn (DE)

(57) **Zusammenfassung**

Die Erfindung betrifft einen Messwertgeber (18) zum Erhalt einer Positionsinformation und ein Verfahren zu dessen Betrieb, mit einer mit einer Sende-/Empfangseinheit (20) des Messwertgebers (18) abtastbaren Maßverkörperung (14), wobei die Maßverkörperung (14) computergenerierte Hologramme (16) und jedes computergenerierte Hologramm (16) diffraktiv wirkende Mikrostrukturen umfasst und jedes computergenerierte Hologramm aufgrund jeweiliger Mikrostrukturen bei einer Abtastung mittels der Sende- /Empfangseinheit (20) einen optischen Code (30) liefert und wobei mittels der Mikrostrukturen Lichtspots (36) mit einer erhöhten Breite erzeugbar sind oder erzeugt werden.

## Beschreibung

Die Erfindung betrifft einen Messwertgeber zum Erhalt einer Positionsinformation sowie ein Verfahren zum Betrieb eines Messwertgebers. Solche Messwertgeber sind an sich bekannt. Exemplarisch kann auf sogenannte Inkrementalgeber verwiesen werden. Die Erfindung betrifft im Weiteren auch ein Aggregat mit einem solchen Messwertgeber, also zum Beispiel einen Antrieb oder einen Elektromotor, um dort als Positionsinformation eine Information in Bezug auf eine Geschwindigkeit oder Lage des Motors/Antriebs oder allgemein des jeweiligen Aggregats zu erhalten.

Der hier zu beschreibende Messwertgeber basiert auf einer optischen Abtastung einer Maßverkörperung. Dies ist zum Beispiel bei Inkrementalgebern ebenfalls bekannt.

Die EP 1 677 081 B schlägt die Verwendung einer diffraktiv wirkenden Maßverkörperung für einen Messwertgeber zum Erhalt einer Positionsinformation vor.

Noch nicht ganz optimal ist die Eignung solcher Messwertgeber für den industriellen Einsatz, speziell wenn es darum geht, besondere Anforderungen an die Genauigkeit und Verlässlichkeit der gelieferten Positionsinformationen zu erfüllen.

Wenn bei im Stand der Technik bekannten Lösungen eine rotierende diffraktive Scheibe oder ein sonstiges Element mit einer entsprechenden Maßverkörperung mithilfe einer optischen Einheit (Sendediode und optischer Sensor) abgetastet und elektrisch ausgewertet wird, unterliegen die Bauteile und Baugruppen eines solchen diffraktiven Messwertgebers und deren Anbringung / Justierung immer gewissen mechanischen Toleranzen, die das empfangene Bild, also den jeweils aufgrund der Abtastung der Maßverkörperung resultierenden optischen Code, im optischen Sensor verschieben oder verzerren. Als Sensor kommen bisher im Wesentlichen einfache CCD-Zeilen oder sogenannte Pin-Dioden zum Einsatz, um die Kosten der Sensoreinheit möglichst gering zu halten. Allerdings kann bei sehr großen Verschiebungen oder Rotationen des empfangenen Bildes die Sensorfläche verlassen werden und eine fehlerhafte Positionsinformation, also zum Beispiel eine fehlerhafte Winkelmessung zur Folge haben. Somit sind die Toleranzen bei bisherigen Ausführungsformen diffraktiver Messwertgeber stark eingeschränkt. Dies wirkt sich wiederum negativ auf die Gesamtkosten (Herstellungskosten) des diffraktiven Messwertgebers aus, da die Herstellung so exakt erfolgen muss, dass mechanische Toleranzen auf ein Minimum reduziert sind.

Eine Aufgabe der Erfindung besteht entsprechend darin, einen auf einer Verwendung einer diffraktiv wirkenden Maßverkörperung basierenden Messwertgeber derart fortzubilden, dass eine Ermittlung einer Positionsinformation so weit wie möglich auch dann noch erfolgen kann, wenn der Messwertgeber nicht exakt justiert ist oder wenn sich eine Justierung im Betrieb, zum Beispiel aufgrund von Temperatureinflüssen, ändert.

Diese Aufgabe wird erfindungsgemäß mit einem Messwertgeber zum Erhalt einer Positionsinformation mit den Merkmalen des Anspruchs 1 gelöst. Dazu ist bei einem Messwertgeber zum Erhalt einer Positionsinformation, der eine Sende- /Empfangseinheit und eine mit der Sende- /Empfangseinheit abtastbare Maßverkörperung umfasst oder dem eine solche Maßverkörperung zugeordnet ist, vorgesehen, dass die Maßverkörperung computergenerierte Hologramme und jedes computergenerierte Hologramm diffraktiv wirkende Mikrostrukturen umfasst und dass jedes computergenerierte Hologramm aufgrund jeweiliger Mikrostrukturen bei einer Abtastung mittels der Sende- /Empfangseinheit einen optischen Code, insbesondere in Form eines Bitmusters, liefert. Der Messwertgeber zeichnet sich dadurch aus, dass mittels der in den computergenerierten Hologrammen angelegten Mikrostrukturen Lichtspots mit einer erhöhten Breite erzeugbar sind.

Die Erfindung geht von der Erkenntnis aus, dass bei diffraktiv optischen Dreh- oder Lineargebern mit computergenerierten Hologrammen (CGH), welche zum Beispiel nach dem in der EP 1 677 081 B beschriebenen Ansatz zur Absolutlagecodierung ein in den computergenerierten Hologrammen angelegtes Bitmuster verwenden, bei einer Abtastung dieser Hologramme ein optischer Code in Form des angelegten Bitmusters und damit ebenfalls ein Bitmuster erzeugt wird. Das Bitmuster entsteht aufgrund der in den Hologrammen jeweils angelegten Mikrostrukturen und einer daran erfolgenden Beugung von kohärentem Licht auf zum Beispiel einen Zeilendetektor. Dabei wird bisher stets davon ausgegangen, dass die resultierenden Lichtspots des binärcodierten oder graycodierten optischen Codes in etwa so groß sind wie ein Detektorpixel. Die Größe der Lichtspots und deren Abstand werden so ausgelegt, dass innerhalb des optischen Codes eine sichere Trennung der Bits möglich sowie eine hohe Signalintensität gegeben ist. Dazu werden die entsprechenden Mikrostrukturen normalerweise quadratisch angelegt, so dass kreisförmige Lichtspots resultieren. Allerdings ergibt sich bei einer solchen Auslegung eine empfindliche Abhängigkeit der Lage des Zeilendetektors zur Lage der ebenfalls zeilenartig angeordneten und damit linear ausgerichteten Bitmuster.

Der Vorteil der Erfindung besteht darin, dass aufgrund der erhöhten Breite zumindest einiger Lichtspots innerhalb des jeweils bei einer Abtastung eines computergenerierten Hologramms resultierenden optischen Codes solche Lichtspots mit erhöhter Breite auch dann von einem Detektor einer Sende-/Empfangseinheit des Messwertgebers erfasst werden können, wenn die Justierung der Sende- /Empfangseinheit zur Maßverkörperung nicht ganz exakt ist oder sich während des Betriebs des Messwertgebers ändert.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Lichtspots mit vergrößerter Breite sind besonders dann sinnvoll, wenn der bei der Abtastung eines computergenerierten Hologramms jeweils resultierende optische Code eine lineare Ausrichtung hat und die Lichtspots eine quer zu dieser Ausrichtung des optischen Codes vergrößerte Ausdehnung aufweisen. Indem die vergrößerte Ausdehnung auf eine Richtung quer zur Ausrichtung des optischen Codes beschränkt ist, bleibt eine sichere Trennung der Bits des optischen Codes unabhängig von der Breite der Lichtspots weiterhin möglich.

Eine Ausführungsform des Messwertgebers oder der von dem Messwertgeber umfassten oder dem Messwertgeber zugeordneten Maßverkörperung besteht darin, dass die Lichtspots eine elliptische oder rechteckige Kontur aufweisen und mit ihrer Längsachse quer zur Ausrichtung des optischen Codes orientiert sind. Lichtspots mit einer solchen Kontur lassen sich in den Mikrostrukturen der jeweiligen computergenerierten Hologramme leicht anlegen.

Bei einer besonderen Ausführungsform des Messwertgebers oder der Maßverkörperung weisen die Lichtspots eine kreisbogenförmige Kontur auf und sind mit ihrer Längsachse quer zur Ausrichtung des optischen Codes orientiert. Zur Vereinfachung der sprachlichen Darstellung wird auch bei Lichtspots, deren erhöhte Breite sich dadurch ergibt, dass diese eine kreisbogenförmige Kontur aufweisen, von einer Längsachse gesprochen, um deren Ausrichtung in Bezug auf eine Ausrichtung des optischen Codes zu beschreiben. Eine solche Längsachse ist dabei eine Achse senkrecht zu einer Symmetrieachse des kreisbogenförmigen Lichtspots oder eine Achse parallel zu einer die beiden Endpunkte der kreisbogenförmigen Kontur verbindenden Achse. Lichtspots mit einer kreisbogenförmigen Kontur eignen sich zur Kompensation dynamischer Effekte, die eine räumliche Relation zwischen der Maßverkörperung und dem dort jeweils abgetasteten computergenerierten Hologramm und der Sende-/Empfangseinheit beeinflussen. Solche Effekte können sich zum Beispiel durch eine Verkippung eines die Maßverkörperung aufweisenden Trägers ergeben, die beim Drehen eines solchen häufig als Scheibe (Encoder Disc) ausgeführten Trägers zu einem Taumeln oder "Wobbeln" des Trägers und damit zu sich örtlich ändernden Auftreffpunkten der Lichtspots führen. Mit einer Verzerrung der Lichtspots mit erhöhter Breite lassen sich auch solche Effekte zumindest teilweise kompensieren. Eine Möglichkeit für eine solche Verzerrung der Lichtspots besteht darin, dass diese nicht nur die erhöhte Breite aufweisen, sondern dass sich insgesamt eine kreisbogenförmige Kontur der Lichtspots ergibt. Bei mehreren kreisbogenförmigen Lichtspots bleiben der Abstand der Lichtspots zueinander und damit eine Möglichkeit der Unterscheidung und Trennung der so kodierten Bits erhalten.

Bei einer Ausführungsform des Messwertgebers oder der Maßverkörperung wie hier und im Folgenden beschrieben ist vorgesehen, dass alle Lichtspots des optischen Codes die quer zur Ausrichtung des optischen Codes vergrößerte Ausdehnung aufweisen. Dies ermöglicht eine Kompensation einer translatorischen oder rotatorischen Fehljustierung von Maßverkörperung und Messwertgeber zueinander.

Bei einer alternativen Ausführungsform des Messwertgebers oder der Maßverkörperung wie hier und im Folgenden beschrieben ist vorgesehen, dass eine Ausdehnung oder vergrößerte Ausdehnung der Lichtspots ausgehend von einem mittleren Lichtspot des optischen Codes zum Rand des optischen Codes zunimmt. Dies ermöglicht zumindest eine Kompensation einer rotatorischen Fehljustierung von Maßverkörperung und Messwertgeber zueinander.

Die Erfindung und bisher erläuterte Ausgestaltungen der Erfindung sind einerseits als Merkmale des Messwertgebers und andererseits als Merkmale der vom Messwertgeber umfassten oder dem Messwertgeber zugeordneten Maßverkörperung beschrieben worden. Die Erfindung betrifft damit auch eine Maßverkörperung wie hier und im Folgenden beschrieben sowie eine Verwendung einer vergrößerte Lichtspots erzeugenden Maßverkörperung zur Kompensation eventueller Justierungsfehler beim Installieren oder beim Betrieb eines Messwertgebers.

Die oben genannte Aufgabe wird auch mit einem Verfahren zum Betrieb eines Messwertgebers wie hier und nachfolgend beschrieben gelöst, wobei sich das Betriebsverfahren dadurch auszeichnet, dass bei einer Abtastung der von der Maßverkörperung umfassten computergenerierten Hologramme deren Mikrostruktur einen optischen Code mit Lichtspots mit einer erhöhten Breite erzeugt.

Bei einer Ausführungsform des Verfahrens ist vorgesehen, dass die Mikrostruktur der computergenerierten Hologramme einen optischen Code mit einer linearen Ausrichtung erzeugt und dass die Lichtspots mit der erhöhten Breite ihre erhöhte Breite quer zur Ausrichtung des optischen Codes aufweisen, so dass einerseits die Möglichkeit zur Trennung und Unterscheidung der Lichtspots erhalten bleibt und andererseits die erhöhte Breite der Lichtspots deren Erfassung durch einen Detektor der Sende- /Empfangseinheit auch noch bei einer eventuellen Fehljustierung von Träger oder Maßverkörperung zur Sende- /Empfangseinheit ermöglicht.

Ein Messwertgeber oder ein Verfahren zum Betrieb eines Messwertgebers wie hier beschrieben kommt zur Verwendung in einer Antriebseinheit, also zum Beispiel einem mit einer Antriebssteuerungseinrichtung gesteuerten und/oder überwachten Elektromotor in Betracht, wobei die Maßverkörperung durch den Elektromotor im Betrieb eine Bewegung erfährt, zum Beispiel indem ein Träger, auf dem sich die Maßverkörperung befindet, mit der Motorwelle oder durch die Motorwelle gedreht wird. Damit betrifft die Erfindung schließlich auch eine Antriebseinheit mit einem solchen Messwertgeber.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Messwertgeber zum Erhalt einer Positionsinformation und
- FIG 2: ein Beispiel für ein resultierendes Bild, wenn mit dem Messwertgeber gemäß FIG 1 eine diffraktiv wirkende und mikrostrukturierte Felder umfassende Maßverkörperung abgetastet wird, und eine Mehrzahl von Lichtspots als bestimmende Elemente des Bildes,
- FIG 3: und
- FIG 4: besondere Ausführungsformen der Lichtspots.

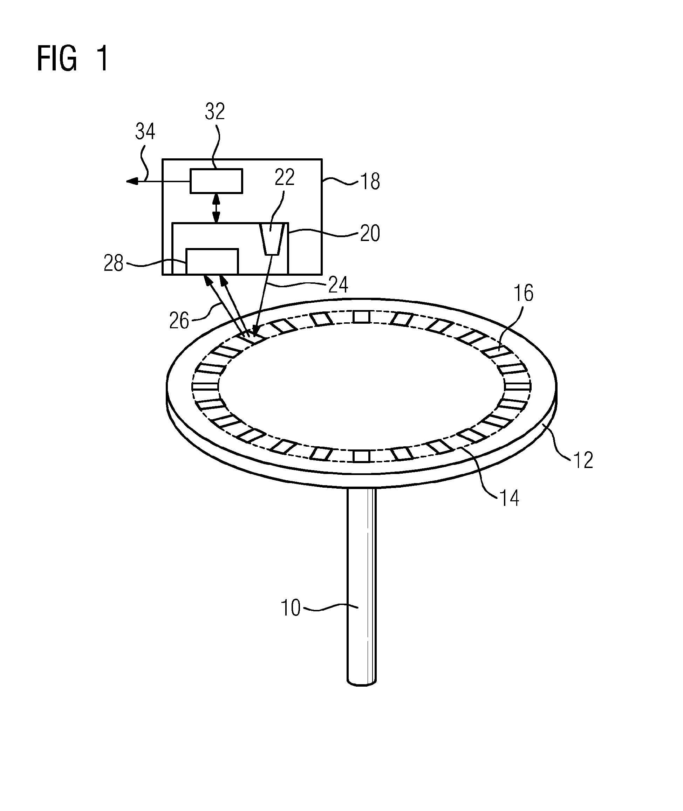

FIG 1 zeigt schematisch vereinfacht eine zum Beispiel mit einer Motorwelle 10 drehbare Scheibe 12 mit einer Maßverkörperung 14. Die Maßverkörperung 14 stellt zum Beispiel eine Absolutspur dar und umfasst eine Mehrzahl von computergenerierten Hologrammen (CGH) 16. Die Maßverkörperung 14 und die davon umfassten computergenerierten Hologramme 16 werden mit einem hier und im Folgenden auch nur kurz als Messwertgeber 18 bezeichneten Messwertgeber zum Erhalt einer Positionsinformation abgetastet.

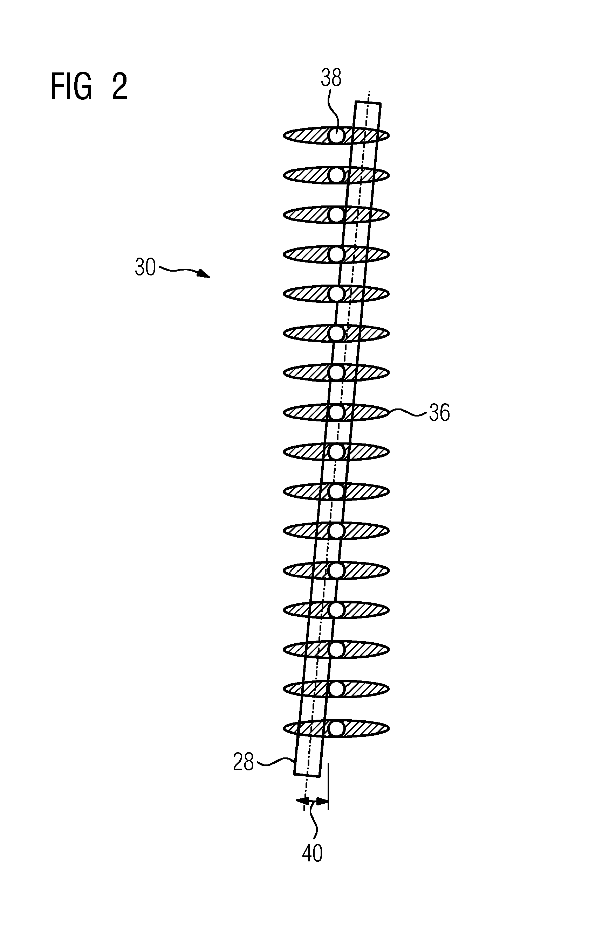

Der Messwertgeber 18 umfasst zum Erhalt einer Positionsinformation als Ergebnis der Abtastung der computergenerierten Hologramme 16 eine Sende-/Empfangseinheit 20. Diese umfasst zur optischen Abtastung der computergenerierten Hologramme 16 zumindest eine Strahlquelle 22 zum Erzeugen eines Abtaststrahls 24, also insbesondere eine Laserdiode oder dergleichen zum Erzeugen eines Laserstrahls als Abtaststrahl 24. Aufgrund einer jeweiligen Mikrostruktur der computergenerierten Hologramme 16 resultiert im Rahmen einer Reflektion oder Transmission des Abtaststrahls 24 (hier am Beispiel einer Reflektion und reflektierter Strahlen 26 dargestellt) eine Beugung des ausgesandten kohärenten Lichts und ein mit einem Detektor 28 der Sende-/Empfangseinheit 20 aufnehmbarer optischer Code 30 (FIG 2). Die Auswertung des optischen Codes 30 erfolgt mit einer von dem Messwertgeber 18 umfassten Verarbeitungseinheit 32 und als Ergebnis dieser Verarbeitung gibt der Messwertgeber 18 als Positionsinformation ein Ausgangssignal 34 aus.

In FIG 1 ist eine Situation dargestellt, bei der der Abtaststrahl 24 reflektiert wird. Deshalb befinden sich die Strahlquelle 22 und der oder jeder Detektor 28 auf der selben Seite der Maßverkörperung 14. Genauso ist denkbar, dass der Abtaststrahl 24 nicht reflektiert, sondern transmittiert wird, so dass sich der optische Code 30 bei einem zu dessen Erfassung vorgesehenen und der Strahlquelle 22 gegenüberliegend angeordneten Detektor 28 ergeben würde (nicht dargestellt).

FIG 2 zeigt ein sich aufgrund der Abtastung der Maßverkörperung 14 und der damit einhergehenden sukzessiven Abtastung jeweils einzelner, von der Maßverkörperung 14 umfasster computergenerierter Hologramme 16 ergebendes Bild. Dieses kann zum Beispiel mit einem als Detektor 28 fungierenden CCD-Sensor oder dergleichen, insbesondere mit einem Zeilensensor, also zum Beispiel einem CCD-Zeilensensor, aufgenommen werden. Insofern zeigt die Darstellung in FIG 2 den Detektor 28 als Zeilensensor und diesen durch eine schematisch vereinfachte Darstellung von dessen optisch sensitiver Erfassungsfläche. Das sich aufgrund der Abtastung eines computergenerierten Hologramms 16 ergebende Bild ist eine Kombination einer Mehrzahl von Lichtspots 36. Die Gesamtheit der Lichtspots 36 bildet jeweils den in dem abgetasteten computergenerierten Hologramm 16 angelegten optischen Code 30. Normalerweise, vergleiche zum Beispiel die eingangs erwähnte EP 1 677 081 B, sind die Lichtspots kreisförmig oder jedenfalls in den beiden flächigen Dimensionen gleich groß oder annähernd gleich groß. Dies ist zum Vergleich als Punktspot 38 im Zentrum der Lichtspots 36 eingezeichnet. Man erkennt, dass die dargestellten Lichtspots 36 gegenüber solchen Punktspots 38 eine erhöhte Breite aufweisen. Die Breite der Lichtspots 36 wird dabei in einer Richtung quer zu einer Verbindungslinie zu einem benachbarten Lichtspot 36 gemessen. Die Richtung, in der die Breite der Lichtspots 36 gemessen wird, kann auch in Relation zu dem optischen Code 30 angegeben werden, denn erkennbar hat der optische Code 30 eine lineare Ausrichtung, weil alle Lichtspots 36 linear angeordnet sind. Die Lichtspots 36 haben entsprechend eine quer zur Ausrichtung des optischen Codes 30 vergrößerte Ausdehnung.

Diese erhöhte Breite / vergrößerte Ausdehnung bewirkt, dass der optische Code 30 auch dann noch erfasst werden kann, wenn eine Fehljustierung der Maßverkörperung 14 in Bezug auf die Sende-/Empfangseinheit 20 und damit auch in Bezug auf deren Detektor 28 vorliegt, wie dies in FIG 2 in Form einer Schrägstellung der Detektorfläche gezeigt ist. Leicht erkennbar ist, dass einzelne Punktspots 38, nämlich die drei bzw. vier äußeren Punktspots 38, nicht auf der Detektorfläche liegen. Ein mit Punktspots 38 dargestellter optischer Code 30 könnte von dem Detektor 28 nicht vollständig erfasst werden. Aufgrund der erhöhten Breite der tatsächlich generierten Lichtspots 36 sind sämtliche Lichtspots 36 zumindest teilweise mit dem Detektor 28 erfassbar, so dass insgesamt der jeweils durch eine bestimmte Anzahl und Abfolge von Lichtspots 36 dargestellte optische Code 30 und schließlich die zugrunde liegende Positionsinformation erfassbar ist. Eine Abweichung der Hauptachse des Detektors 28 von der entlang der Ausrichtung des optischen Codes 30 verlaufenden Achse beschreibt ein Maß für eine Fehljustierung von Detektor 28 und Maßverkörperung 14 und die in FIG 2 dargestellte Schräglage (Verkippung) des Detektors 28 stellt den von der jeweiligen Breite der Lichtspots 36 abhängigen maximalen Toleranzwinkel 40 dar.

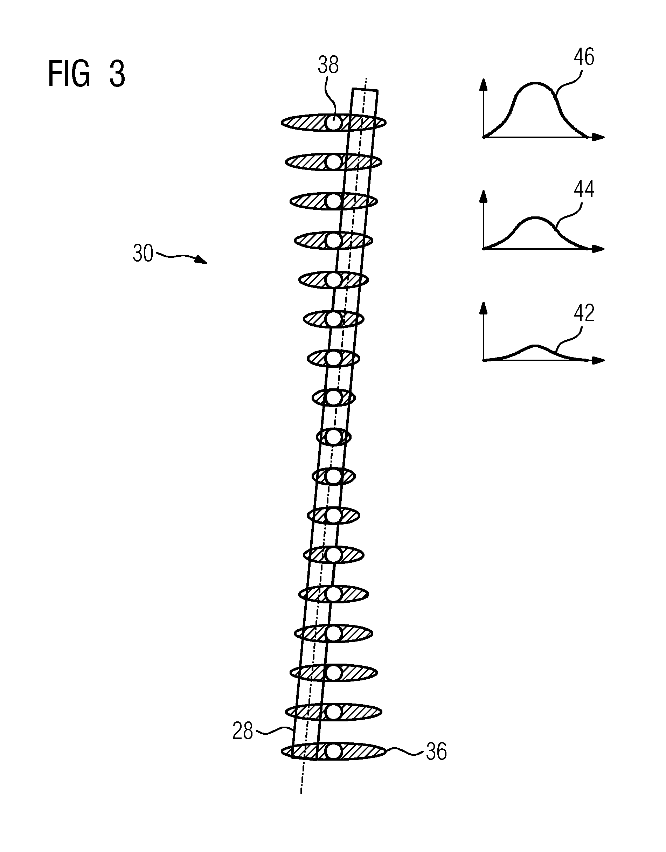

Während FIG 2 eine Situation zeigt, bei der alle Lichtspots 36 des optischen Codes 30 die quer zur Ausrichtung des optischen Codes 30 vergrößerte Ausdehnung aufweisen, zeigt FIG 3 eine Situation, bei der eine Ausdehnung oder vergrößerte Ausdehnung der Lichtspots 36 ausgehend von einem mittleren Lichtspot 36 des optischen Codes 30 in Richtung auf den Rand des optischen Codes 30, also in Richtung auf die äußeren Lichtspots 36, zunimmt. Eine solche Ausprägung der Lichtspots 36 ist für Situationen günstig, bei denen davon ausgegangen werden kann, dass eine Justierung von Maßverkörperung 14 und Sende- /Empfangseinheit zueinander zumindest im Hinblick auf einen Mittelpunkt des Detektors 28 im Wesentlichen korrekt ist und dass sich eine etwaige Fehljustierung auf eine Verdrehung von Maßverkörperung 14 und Detektor 28 zueinander beschränkt. Bei dieser Variante der Lichtspots 36 kann zusätzlich noch vorgesehen sein, dass eine Intensität der Lichtspots 36 entlang der Ausrichtung des optischen Codes 30 variiert wird. Dies ist im rechten Teil der Darstellung in FIG 2 durch drei gaußförmige Intensitätsverläufe 42, 44, 46 gezeigt. Der untere Intensitätsverlauf 42 ist dabei für Lichtspots 36 im Zentrum des optischen Codes 30 vorgesehen. Der obere Intensitätsverlauf 46 ist für Lichtspots 36 im Randbereich des optischen Codes 30 vorgesehen und der mittlere Intensitätsverlauf 44 ist entsprechend für die verbleibenden Lichtspots 36 vorgesehen. Dies bewirkt, dass die äußeren Lichtspots 36, deren Erfassbarkeit von einer eventuellen Fehljustierung besonders betroffen ist, eine erhöhte Helligkeit aufweisen, so dass eine Erfassung eines Randbereichs solcher Lichtspots 36 mit dem Detektor 28 normalerweise ausreicht, um bei der Auswertung der einzelnen Pixel des Detektors 28 eine entsprechende Bitinformation zu erzeugen. Die unterschiedlichen Intensitäten der Lichtspots 36 werden in der Mikrostruktur der computergenerierten Hologramme 16 angelegt.

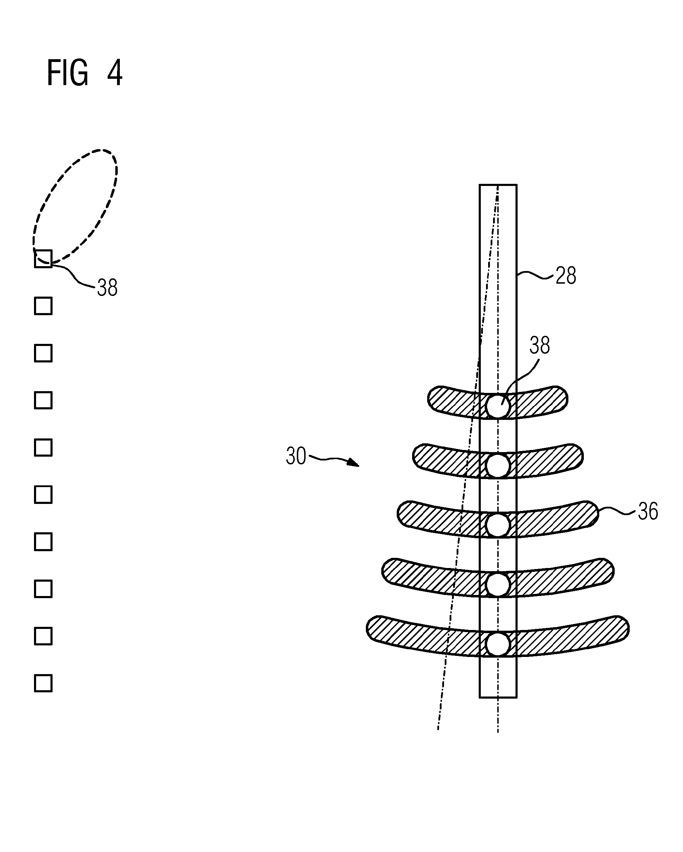

FIG 4 zeigt Lichtspots 36 mit einer kreisbogenförmigen Kontur, die mit ihrer Längsachse quer zur Ausrichtung des optischen Codes 30 orientiert sind. Eine solche Form der Lichtspots 36 ist günstig, wenn es darum geht, dynamische Effekte durch eine Verkippung der Encoder Disc auf deren Achse zu kompensieren. Dann "wandert" nämlich der Auftreffpunkt eines Punktspots 38 auf einer elliptischen Bahn ("Elliptical Walk"), wie dies in FIG 4 auf der linken Seite für einen Punktspot 38 dargestellt ist. Die kreisbogenförmige Kontur der Lichtspots 36 ermöglicht auch bei einem solchen Wandern des Zentrums der Lichtspots 36 eine Erfassung des optischen Codes 30 des jeweils abgetasteten computergenerierten Hologramms 16 zumindest während einzelner Abschnitte des Elliptical Walks.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben werden ein Messwertgeber 18 zum Erhalt einer Positionsinformation und ein Verfahren zu dessen Betrieb. Der Messwertgeber 18 umfasst selbst oder in räumlicher Zuordnung eine mit einer Sende-/Empfangseinheit 20 des Messwertgebers 18 abtastbare Maßverkörperung 14. Die Maßverkörperung 14 umfasst computergenerierte Hologramme 16 und jedes computergenerierte Hologramm 16 umfasst diffraktiv wirkende Mikrostrukturen, so dass jedes computergenerierte Hologramm aufgrund jeweiliger Mikrostrukturen bei einer Abtastung mittels der Sende- /Empfangseinheit 20 einen optischen Code 30 liefert,
wobei mittels der Mikrostrukturen Lichtspots 36 mit einer erhöhten Breite erzeugbar sind oder erzeugt werden.

## Patentansprüche

1. Messwertgeber (18) zum Erhalt einer Positionsinformation, mit einer mit einer Sende-/Empfangseinheit (20) des Messwertgebers (18) abtastbaren Maßverkörperung (14), wobei die Maßverkörperung (14) computergenerierte Hologramme (16) und jedes computergenerierte Hologramm (16) diffraktiv wirkende Mikrostrukturen umfasst und jedes computergenerierte Hologramm aufgrund jeweiliger Mikrostrukturen bei einer Abtastung mittels der Sende-/Empfangseinheit (20) einen optischen Code (30) liefert,
**dadurch gekennzeichnet, dass mittels** der Mikrostrukturen Lichtspots (36) mit einer erhöhten Breite erzeugbar sind.

2. Messwertgeber (18) nach Anspruch 1, wobei der optische Code (30) eine lineare Ausrichtung hat und der optische Code (30) Lichtspots (36) mit einer quer zur Ausrichtung des optischen Codes (30) vergrößerten Ausdehnung umfasst.

3. Messwertgeber (18) nach Anspruch 2, wobei die Lichtspots (36) eine elliptische oder rechteckige Kontur aufweisen und mit ihrer Längsachse quer zur Ausrichtung des optischen Codes (30) orientiert sind.

4. Messwertgeber (18) nach Anspruch 2, wobei die Lichtspots (36) eine kreisbogenförmige Kontur aufweisen und mit ihrer Längsachse quer zur Ausrichtung des optischen Codes (30) orientiert sind.

5. Messwertgeber (18) nach Anspruch 2, 3 oder 4, wobei alle Lichtspots (36) des optischen Codes (30) die quer zur Ausrichtung des optischen Codes (30) vergrößerte Ausdehnung aufweisen.

6. Messwertgeber (18) nach Anspruch 2, 3 oder 4, wobei eine Ausdehnung oder vergrößerte Ausdehnung der Lichtspots (36) ausgehend von einem mittleren Lichtspot (36) des optischen Codes (30) zum Rand des optischen Codes (30) zunimmt.

7. Messwertgeber (18) nach Anspruch 6, wobei eine Intensität der Lichtspots (36) ausgehend von einem Zentrum des optischen Codes (30) zum Rand des optischen Codes (30) zunimmt

8. Verwendung einer vergrößerte Lichtspots (36) erzeugenden Maßverkörperung (14) zur Kompensation eventueller Justierungsfehler beim Installieren eines Messwertgebers (18) nach einem der Ansprüche 1 bis 7.

9. Verfahren zum Betrieb eines Messwertgebers (18) nach einem der Ansprüche 1 bis 7, wobei bei einer Abtastung der von der Maßverkörperung (14) umfassten computergenerierten Hologramme (16) deren Mikrostruktur einen optischen Code (30) mit Lichtspots (36) mit einer erhöhten Breite erzeugt.

10. Verfahren nach Anspruch 9, wobei die Mikrostruktur der computergenerierten Hologramme (16) einen optischen Code (30) mit einer linearen Ausrichtung erzeugt und wobei die Lichtspots (36) mit der erhöhten Breite ihre erhöhte Breite quer zur Ausrichtung des optischen Codes (30) aufweisen.

11. Verfahren nach Anspruch 9 oder 10, wobei die Lichtspots (36) mit der erhöhten Breite eine elliptische, rechteckige oder kreisbogenförmige Kontur aufweisen.

12. Antriebseinheit mit einem Messwertgeber (18) nach einem der Ansprüche 1 bis 7.
